# EUROPÄISCHE PATENTANMELDUNG

(11) **EP 4 512 877 A1**
(43) Veröffentlichungstag der Anmeldung: **26.02.2025**
(21) Anmeldenummer: 24192630.2
(22) Anmeldetag: 02.08.2024
(51) Int. Cl.: C11D 1/72, C11D 3/20, C11D 3/30, C11D 7/26, C11D 7/32, C09D 9/00, C09D 9/04

(54) **REINIGUNGSLÖSUNG ZUR ENTFERNUNG VON NICHT AUSGEHÄRTETEN WASSERBASIERTEN LACKRESTEN**

(30) Priorität: 15.08.2023 DE 102023121753
(71) Anmelder: Zeller + Gmelin GmbH & Co. KG, 73054 Eislingen/Fils (DE)
(72) Erfinder: Hilsenbek, Uwe, 73054 Eislingen/Fils (DE); Milwich, Silvia, 73054 Eislingen/Fils (DE); Möller, Christine, 73054 Eislingen/Fils (DE)
(74) Vertreter: Moser Götze & Partner Patentanwälte mbB

(57) **Zusammenfassung**

Reinigungslösung zur Entfernung von nicht ausgehärteten wasserbasierten Lackresten enthaltend 10 - 50 Gew.-% Propylenglykol-n-propylether.

## Beschreibung

Die vorliegende Erfindung betrifft eine Reinigungslösung zur Entfernung von nicht ausgehärteten wasserbasierten Lackresten und ein Konzentrat zu dessen Bereitstellung.

Reinigungslösungen sind aus dem Einsatz in Lackierereien bekannt und dienen dort zum Entfernen von Lackresten, z. B. bei einem Farbwechsel oder zum regelmäßigen Spülen.

So erfolgen beim Lackieren von KFZ oder KFZ-Anbauteilen in Lackierstraßen eine Reihe aufeinander folgender Prozessabschnitte, welche jedes Teil bzw. Karosserie durchläuft.

Hierbei muss die Lackierstraße bzw. deren Sprühroboter und insbesondere die Sprühdüsen regelmäßig gereinigt werden, um die Lackierqualität hochzuhalten, und mindestens bei einem Farbwechsel, um keine Verunreinigungen zu bewirken. Oft werden daher die Reinigungslösungen als Spülmedium bezeichnet.

So werden meist nach einer gewissen Anzahl lackierter Teile und immer bei Farbwechseln Spülprogramme mit einer lösemittelbasierten Reinigungslösung ausgeführt. Dabei werden alle Applikationseinrichtungen wie Hochrotationszerstäuber (Glocken), Handpistolen, Spritzzerstäuber, Versorgungsleitungen und, falls vorhanden, elektrostatische Installationen von frischen, noch nicht ausgehärteten Lackresten gesäubert.

Dazu werden entsprechende Reinigungslösungen eingesetzt, die möglichst schnell ohne lange Einwirkzeit (wenige Sekunden) und gründlich wirken müssen.

Als Reinigungslösung kommen dazu häufig Mischungen von organischen Lösungsmitteln mit Aminen und Tensiden zum Einsatz.

So offenbart z. B. die DE10 2010 020 489 A1 eine wässrige Reinigungslösung zur Entfernung von nichtausgehärteten Lackanhaftungen mit zumindest einem Amin mit 4-6 C-Atomen, zumindest einem Glykolether mit 8-10 C-Atomen, und zumindest einem nichtionischen Tensid.

Bisher werden auch häufig als Lösungsmittel in den Reinigungslösungen flüchtige organische Lösungsmittel (VOC, Volatile Organic Compound; vgl. §2 Nr. 11 31. BlmSchV) eingesetzt, die sich später als Gefahrenstoff, insbesondere nach der REACH Verordnung herausstellten und daher zu ersetzen sind.

So auch das Lösungsmittel Butylglykol, dass bisher in entsprechenden Reinigungslösungen mit bis zu 100 % ein Hauptbestandteil ist.

Butylglykol bzw. dessen Dampf wird nach neusten Erkenntnissen in einer Menge größer 30 % in Formulierungen als akut toxisch eingestuft. Daher sind Butylglykol enthaltende Gemische mit einem Gehalt größer 30 % entsprechend zu kennzeichnen und nur unter erhöhtem Aufwand verwendbar und entsorgbar.

Daher besteht die Aufgabe der Erfindung darin, eine Reinigungslösung bzw. ein entsprechendes Konzentrat zu dessen Bereitstellung bereitzustellen, dessen Reinigungswirkung und Handhabung nicht verschlechtert ist, aber weniger oder kein Butylglykol enthält.

Diese Aufgabe wird durch die in Anspruch 1 angegebene Reinigungslösung bzw. dessen Konzentrat gelöst.

Erfindungsgemäß ist festgestellt worden, dass Butylglykol durch Propylenglykol-n-propylether zumindest teilweise ersetzt werden kann, ohne dass es zu Verschlechterungen der Reinigungswirkung kommt.

So ist es möglich, den Gehalt an Butylglykol mindestens unter die gefährliche Grenze von 30 % einzustellen. Auch ein kompletter Verzicht ist möglich.

Propylenglykol-n-propylether ist besonders vorteilhaft, weil trotz eines Dampfdrucks von 2,1 mbar bei 20 °C keine Gefahrstufeneinordnung wie bei Butylglykol vorliegt und eine hohe Reinigungswirkung erzielbar ist. Besonders geeignet ist die erfindungsgemäße Reinigungslösung für die Entfernung von nicht ausgehärteten wasserbasierten Lackresten.

Als besonders vorteilhaft erweist sich dabei eine Verwendung der erfindungsgemäßen Reinigungslösung zur Spülung und Reinigung von lackführenden Versorgungs- oder Ringleitleitungen von Anlagen für einen kontinuierlichen Spritzlackierprozess, und/oder Lack-Hochrotationszerstäubern (Glocken), und/oder Lack-Spritzzerstäubern, und/oder Lackier-Handpistolen.

Dabei kann die Kontaktzeit oder Einwirkungszeit der erfindungsgemäßen Reinigungslösung im üblichen Bereich von 0,5 bis 20 Sekunden liegen. Meist liegt die eigentliche Spüldauer z. B. im Bereich von weniger als 2 Sekunden.

In einer bevorzugten Ausgestaltung enthält eine erfindungsgemäße Reinigungslösung (unverdünntes Konzentrat) zwischen 10 und 50 Gew.-% Propylenglykol-n-propylether. Besonders bevorzugt ist es, wenn die Menge Propylenglykol-n-propylether zwischen 11 - 46 Gew.-% und ganz besonders bevorzugt 27 - 46 Gew.-% beträgt.

Erfindungsgemäße Reinigungslösungen enthalten neben dem Lösungsmittel Propylenglykol-n-propylether ggf. noch weitere Lösungsmittel oder Amine, Tenside und ggf. Entschäumer.

So kann die erfindungsgemäße Reinigungslösung weitere Lösemittel aufweisen. In Betracht kommen folgende Stoffe einzeln oder als Mischungen z. B. Butyldiglykol, n-Butanol, Benzylalkohol, Hexylenglykol, Hexylglykol, Propylenglykol 1,2, 2-Ethylhexanol.

Eine bevorzugte Variante mit guten Reinigungsergebnissen enthält bis zu 11 Gew.-% Butyldiglykol, vorzugsweise 11 Gew.-%.

Eine bevorzugte Variante mit ebenfalls guten Reinigungsergebnissen enthält bis zu 24 Gew.-% Alkohol, insbesondere eines C2 - C4 aliphatischen Alkohols, ganz besonders bevorzugt n-Butanol und/oder Benzylalkohol.

Eine bevorzugte Variante mit ebenfalls guten Reinigungsergebnissen enthält 8 - 20 Gew.-% Hexylglykol.

Amine können vorzugsweise als Monoethanolamin (MEA), Methyldiethanolamin (MDEA), Triethanolamin (TEA), Diethylethanolamin (DEEA) enthalten sein und dann in einer Menge zwischen 0,5 und 25 Gew.-%. Die Amine können einzeln oder in Mischungen eingesetzt sein.

Zusätzlich enthalten Reinigungslösungen nach der Erfindung zwischen 0,5 und 5 Gew.-% Tenside. Bevorzugt ist der Einsatz nichtionischer Tenside. Vorzugsweise werden ethoxylierte und/oder propoxylierte Fettalkohole und/oder Fettamine eingesetzt.

Zusammenfassend ergeben sich folgende Bereiche für die Bestandteile erfindungsgemäßer Reinigungslösungen (Tabelle 1):

| | |
|---|---|
| Stoff | Gehalt [Gew.-%] |
| Butylglykol | 0 - 29 |
| Butyldiglykol | 0 - 11 |
| Propylenglykol-n-propylether | 10 - 50 |
| n-Butanol | 0 - 24 |
| Hexylglykol | 0 - 20 |
| Benzylalkohol | 0 - 8 |
| Amine allgemein | 0,5 - 25 |
| Tenside | 0,5 - 5 |

Vorzugsweise findet eine Verwendung einer Reinigungslösung nach der Erfindung in mit Wasser verdünnter Form zur Reinigungsanwendung statt. Dabei kann die Konzentration bzw. Verdünnung in weiteren Bereichen variiert werden und richtet sich nach den jeweiligen Umgebungen bzw. Verschmutzungen. Sinnvolle Konzentrationsbereiche liegen erfahrungsgemäß zwischen 3 und 15 Gew.-% bei der Anwendung zum Abwaschen und Spülen von Anlagen bzw. deren Teile und Sprühdüsen z. B. der Roboter.

Wasser zur Verdünnung kann ggf. vollentsalztes Wasser sein.

### BEISPIELE

Nachfolgend sind in Tabelle 2 Zusammensetzungen erfindungsgemäßer Reinigungslösungen (Konzentrate) beispielhaft aufgeführt:

| Stoffe in Gew.-% | Beispiel 1 | Beispiel 2 | Beispiel 3 | Beispiel 4 |
|---|---|---|---|---|
| Butylglykol | 29 | 29 | 29 | 29 |
| Butyldiglykol | 0 | 0 | 11 | 11 |
| Propylenglykol-n-propylether | 46 | 44,5 | 27,75 | 33,75 |
| n-Butanol | 24 | 24 | 0 | 0 |
| Hexylglykol | 0 | 0 | 8 | 20 |
| Benzylalkohol | 0 | 0 | 8 | 0 |
| MEA | 0,5 | 0 | 0 | 0 |
| MDEA | 0 | 2 | 15 | 5 |
| Tenside | 0,5 | 0,5 | 1,25 | 1,25 |

Mit solchen erfindungsgemäßen Reinigungslösungen werden trotz der gleich kurzen Kontaktzeit gleich gute Reinigungsergebnisse bei nicht ausgehärteten wasserbasierten Lackresten erzielt, wie sich aus den nachfolgenden Versuchen ergibt.

Vergleichsbeispiele des Standes der Technik (Tabelle 3) sind nachfolgend aufgeführt. Im jeweiligen Vergleichsbeispiel ist analog dem jeweiligen korrespondierenden Produkt bzw. Beispiel (oben) Propylenglykol-n-propylether durch Butylglykol ersetzt:

| Stoffe in Gew.-% | Vergleichsbeispiel 1 | Vergleichsbeispiel 2 | Vergleichsbeispiel 3 | Vergleichsbeispiel 4 |
|---|---|---|---|---|
| Butylglykol | 75 | 73,5 | 56,75 | 62,75 |
| Butyldiglykol | 0 | 0 | 11 | 11 |
| Propylenglykol-n-propylether | 0 | 0 | 0 | 0 |
| n-Butanol | 24 | 24 | 0 | 0 |
| Hexylglykol | 0 | 0 | 8 | 20 |
| Benzylalkohol | 0 | 0 | 8 | |
| MEA | 0,5 | 0 | 0 | 0 |
| MDEA | 0 | 2 | 15 | 5 |
| Tenside | 0,5 | 0,5 | 1,25 | 1,25 |

### VERSUCHE

Zur Beurteilung der Reinigungsleistung der erfindungsgemäßen Reinigungslösungen im Vergleich zu Vergleichsbeispielen (Tabelle 3) wurden die Beispiele aus der obigen Tabelle 2 in sogenannten Büretten-Spültest (analog 3.2 der VW Norm PV 5.5.1, Ausgabe 2016-10) jeweils eingesetzt und verglichen.

Die Lösefähigkeit der untersuchten Spülmedien ist dazu mit Hilfe einer speziell konzipierten Apparatur geprüft worden. Die Apparatur besteht aus einem Gestell, Klemmvorrichtungen, einer automatisierten Bürette (Dosimat), einer etwa 10 cm breiten und etwa 20 cm langen Edelstahlplatte, und einer Auffangvorrichtung.

Der Auslauf der Bürette ist jeweils mit Hilfe der Klemmvorrichtungen senkrecht befestigt. Dabei wird dieser so justiert, dass der Abstand von der Bürettenauslassöffnung zu der Oberfläche der Edelstahlplatte genau 1 cm beträgt. Der Dosierkolben der Bürette ist mit der zu prüfenden Reinigungslösung befüllt. Die Edelstahlplatte liegt in einem Winkel von ca. 20° (+- 5°) im Gestell.

Der verarbeitungsfertig eingestellte Lack wird mit einer Schichtstärke von etwa 30 bis 40 µm auf der Edelstahlplatte mit einem Lackfilmziehrakel aufgebracht. Das entsprechende Lackmaterial wird mit Hilfe des Lackfilmziehrakels möglichst über die komplette Edelstahloberfläche aufgezogen.

Nach einer Wartezeit von 10 Minuten (ablüften) bei Raumtemperatur (20 °C) wurde die Reinigungslösung auf die mit dem Lack versehene Stelle der Edelstahlplatte getropft. Dabei wurden innerhalb von 2 Minuten 15 ml (ca. 1 Tropfen/s) aufgetropft.

Die Reinigungswirkung wurde wie folgt beurteilt:
- Sehr gut: Material löst sich nach wenigen Tropfen Reiniger vollständig und feinteilig ab.
- Gut: Material löst sich nach 15 ml / 2 Min. vollständig und feinteilig ab.
- Ausreichend: Material löst sich nach 15 ml / 2 Min. teilweise und feinteilig ab.
- Schlecht: Material löst sich nach 15 ml / 2 Min. nicht, oder in Fetzen ab.

Die Ergebnisse sind in den nachfolgenden Tabellen 4A und 4B aufgeführt (Verdünnung in VE-Wasser in Klammern):

| Lack | Beispiel 1 (10%) | Vergleichsbeispiel 1 (10%) | Beispiel 2 (10%) | Vergleichsbeispiel 2 (10 %) |
|---|---|---|---|---|
| Wörwag 2K Primer Schiefergrau + Härter | Sehr gut | Gut | Gut | Gut |
| Akzo 2K Primer Schiefergrau + Härter | Sehr gut | Gut | Gut | Gut |
| PPG 2K BC Dark Chrome | Sehr gut | Gut | Gut | Gut |
| Mäder 2K BC Platinumgrau | Sehr gut | Sehr gut | Gut | Gut |
| Wörwag 1 K BC weiß | n.n | n.n. | Sehr gut | Gut |
| 1K Denim Blau | n.n | n.n.. | Gut | Ausr. |
| Akzo 1 K Polarweiß | Sehr gut | Gut | n.n. | n.n. |
| PPG 1K Primer Gris moyen | n.n. | n.n. | n.n. | n.n |
| Nippon 1 K Gris moyen | n.n. | n.n. | n.n. | n.n. |

**Tabelle 4B:**

| Lack | Beispiel 3 (6%) | Vergleichsbeispiel 3 (6%) | Beispiel 4 (6%) | Vergleichsbeispiel 4 (6%) |
|---|---|---|---|---|
| Wörwag 2K Primer Schiefergrau + Härter | Gut | Gut | Gut | Gut |
| Akzo 2K Primer Schiefergrau + Härter | Gut | Gut | Gut | Gut |
| PPG 2K BC Dark Chrome | Gut | Gut | Gut | Gut |
| Mäder 2K BC Platinumgrau | Gut | Gut | Gut | Gut |
| Wörwag 1 K BC weiß | n.n. | n.n | n.n. | n.n. |
| 1K Denim Blau | n.n. | n.n. | n.n. | n.n. |
| Akzo 1 K Polarweiß | n.n. | n.n. | n.n. | n.n. |
| PPG 1K Primer Gris moyen | n.n | n.n. | Gut | Gut |
| Nippon 1 K Gris moyen | n.n. | n.n. | Gut | Gut |

Die Versuchsergebnisse zeigen, dass die erfindungsgemäßen Reinigungslösungen ein der bekannten Reinigungslösung entsprechendes Ergebnis erzielen.

## Patentansprüche

1. Reinigungslösung zur Entfernung von nicht ausgehärteten wasserbasierten Lackresten enthaltend 10 - 50 Gew.-% Propylenglykol-n-propylether.

2. Reinigungslösung nach Anspruch 1, **dadurch gekennzeichnet, dass** 11 - 46 Gew.-% Propylenglykol-n-propylether enthalten ist.

3. Reinigungslösung nach Anspruch 2, **dadurch gekennzeichnet, dass** 27 - 46 Gew.-% Propylenglykol-n-propylether enthalten ist.

4. Reinigungslösung nach einem der vorhergehenden Ansprüche, **dadurch gekennzeichnet, dass** bis zu 11 Gew.-% Butyldikglykol enthalten ist.

5. Reinigungslösung nach einem der vorhergehenden Ansprüche, **dadurch gekennzeichnet, dass** zwischen 0,5 und 25 Gew.-% Amine enthalten sind.

6. Reinigungslösung nach einem der vorhergehenden Ansprüche, **dadurch gekennzeichnet, dass** zwischen 0,5 und 5 Gew.-% Tenside enthalten sind.

7. Reinigungslösung nach einem der vorhergehenden Ansprüche, **dadurch gekennzeichnet, dass** bis zu 24 Gew.-% Alkohol, insbesondere eines C2-C4 aliphatischen Alkohols, ganz besonders bevorzugt n-Butanol und/oder Benzylalkohol enthalten sind.

8. Reinigungslösung nach einem der vorhergehenden Ansprüche, **dadurch gekennzeichnet, dass** 8 - 20 Gew.-% Hexylglykol enthalten ist.

9. Verwendung einer Reinigungslösung nach einem der vorgehenden Ansprüche in mit Wasser verdünnter Form zur Reinigungsanwendung in Lackierstraßen in einer Konzentration zwischen 3 und 15 Gew.-%.
